# EUROPEAN PATENT APPLICATION

(11) **EP 4 757 127 A1**
(43) Date of publication of application: **10.06.2026**
(21) Application number: 24849184.7
(22) Date of filing: 30.07.2024
(51) Int. Cl.: H02K 3/04, H02K 3/28

(54) **STATOR FOR ROTATING ELECTRICAL MACHINE**

(30) Priority: 31.07.2023 JP 2023124988
(71) Applicant: NHK Spring Co., Ltd., Kanagawa 236-0004 (JP)
(72) Inventor: YODA, Yu, Yokohama-shi, Kanagawa 236-0004 (JP); KAMEDA, Yohei, Yokohama-shi, Kanagawa 236-0004 (JP); YAMAMOTO, Tatsuki, Yokohama-shi, Kanagawa 236-0004 (JP); MINAMIKAWA, Hiroshi, Yokohama-shi, Kanagawa 236-0004 (JP)
(74) Representative: DREISS Patentanwälte PartG mbB
(86) International application number: PCT/JP2024/027217
(87) International publication number: WO 2025/028539

(57) **Abstract**

A stator for a rotating electrical machine, wherein when the number of slots per pole per phase, which is a value obtained by dividing the number of the slots by the number of magnetic poles of a rotor and the number of phases of alternating current generated in a stator coil, is 2, and when P denotes a magnetic pole pitch, which is a value obtained by dividing the number of the slots by the number of the magnetic poles of the rotor, and k denotes the difference between a slot pitch, which is the pitch of the slots on a side where segment coils are inserted, and the magnetic pole pitch, one of the slot pitches in an outermost layer or an innermost layer of a stator core on the insertion side is set to P + 1 and the other is set to P - 1, and one of the slot pitch in a middle layer between the outermost layer and the innermost layer of the stator core on the insertion side or the pitch of the slots on a side where joint end portions joined to each other project is set to P + k and the other is set to P - k.

## Description

### TECHNICAL FIELD

This disclosure relates to a stator for a rotating electrical machine.

### BACKGROUND ART

In recent years, rotating electrical machines for driving vehicles have become increasingly more compact and more powerful, and there are rotating electrical machines in which the stator windings are configured using stator coils comprising flat wires with rectangular cross sections. Patent document 1 mentioned below describes a stator for a rotating electrical machine in which six or more slot conductors are inserted into one slot, wherein the slot pitch of a jumper wire interconnecting round windings having different positions in a radial direction straddles the slots at at least two or more different slot pitches, when N is defined as the number of slots per pole, the different slot pitches of the jumper wire are set to a slot pitch of N + 1 and a slot pitch of (N + 1) ± 1, the stator has a plurality of slot conductor groups each configured by a plurality of winding conductors with the same phase, the plurality of winding conductors that configure each slot conductor group are inserted so that the slots and layers are adjacent to each other in a predetermined number Ns of slots that are continuously arranged in a circumferential direction of the stator core, and when NSPP is defined as the number of slots per pole per phase and 2 × NJ is defined as the number of jumper wires per phase with a slot pitch of (N + 1) ± 1, the predetermined number Ns is set to satisfy the equation "Ns = NSPP + NJ."

### SUMMARY OF INVENTION

### Technical Problem

In the technology described in Japanese Patent No. 6513831, when segment coils are interconnected by a wave winding in the stator core, the segment coils are interconnected using jumper wires. For this reason, the number of parts associated with using jumper wires increases, and a process for attaching parts also arises, so there has been the problem that the productivity of the stator coil is reduced.

The technology of this disclosure provides a stator with which the productivity of a wave-wound stator coil can be improved even when segment coils are used.

### Solution to Problem

A first aspect pertaining to the technology of this disclosure is a stator for a rotating electrical machine, the stator including: a stator core having plural slots; and a stator coil formed by segment coils, which are respectively configured using a flat wire with a rectangular cross section and inserted into different slots spaced apart from each other in a circumferential direction of the stator core, and each of which has a joint end portion that projects from the slot at an opposite side from the insertion side and is joined in a wave winding to the joint end portion of another segment coil along the circumferential direction to thereby electrically connect the segment coils, in which, when the number of slots per pole per phase, which is a value obtained by dividing the number of the slots by the number of magnetic poles of a rotor that rotates relative to the stator core and the number of phases of alternating current generated in the stator coil, is 2, and when P denotes a magnetic pole pitch, which is a value obtained by dividing the number of the slots by the number of the magnetic poles of the rotor, and k denotes the difference between a slot pitch, which is the pitch of the slots at a side at which the segment coils are inserted, and the magnetic pole pitch, one of the slot pitches in an outermost layer or an innermost layer of the stator core on the insertion side is set to P + 1 and the other is set to P - 1, and one of the slot pitches in a middle layer between the outermost layer and the innermost layer of the stator core on the insertion side or the pitch of the slots at a side to which the joint end portions that are joined to each other project is set to P + k and the other is set to P - k.

A second aspect pertaining to the technology of this disclosure is the stator for a rotating electrical machine pertaining to the first aspect, in which the segment coils with the same phase that are adjacent to each other in a radial direction in the wave winding in the stator coil are disposed at positions at which the slot pitches are staggered by k from each other.

A third aspect pertaining to the technology of this disclosure is the stator for a rotating electrical machine pertaining to the second aspect, in which the wave winding is set to k < P.

A fourth aspect pertaining to the technology of this disclosure is the stator for a rotating electrical machine pertaining to the first aspect, in which the wave winding in the stator coil is a full-pitch winding, and k = 0.

### Advantageous Effects of Invention

The technology of this disclosure provides a stator with which the productivity of a wave-wound stator coil can be improved even when segment coils are used.

### BRIEF DESCRIPTION OF DRAWINGS

FIG. 1 is a perspective view showing a stator for a rotating electrical machine pertaining to an embodiment.
FIG. 2 is a perspective view showing part of a stator coil and a stator core with which the stator for a rotating electrical machine pertaining to an embodiment is equipped.
FIG. 3 is an enlarged perspective view showing part of the configuration shown in FIG. 2.
FIG. 4 is a drawing showing an example of stator coil wiring pertaining to a comparative example.
FIG. 5 is a drawing showing an example of stator coil wiring pertaining to an embodiment.
FIG. 6 is a drawing showing an example of stator coil wiring pertaining to an embodiment.
FIG. 7 is a drawing showing an example of stator coil wiring pertaining to an embodiment.
FIG. 8 is a drawing showing an example of stator coil wiring pertaining to an embodiment.

### DESCRIPTION OF EMBODIMENTS

### <First Embodiment>

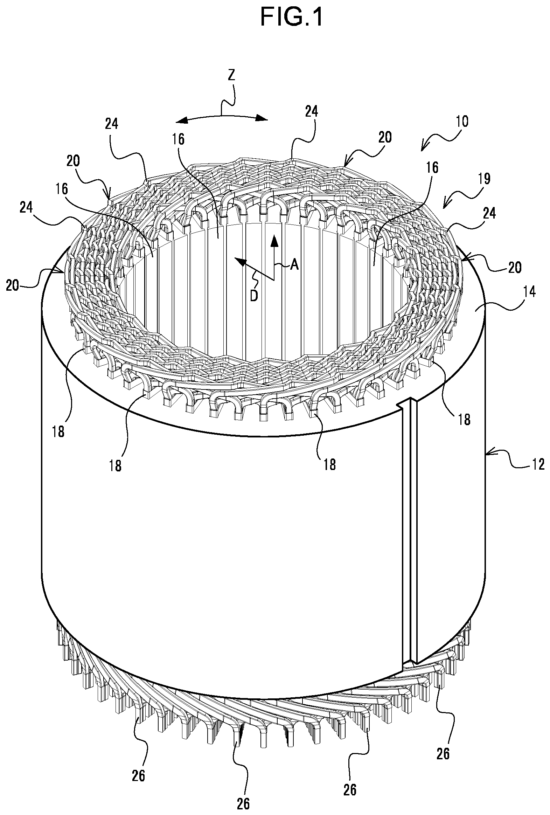

A stator 10 for a rotating electrical machine pertaining to a first embodiment (hereinafter, simply called "the stator 10") will be described below with reference to FIG. 1 to FIG. 5. It will be noted that in the drawings some reference signs may be omitted to facilitate viewing of the drawings. As shown in FIG. 1, the stator 10 pertaining to this embodiment includes a stator core 12 and a stator coil 19. The stator 10 configures a three-phase alternating current rotating electrical machine together with a rotor not shown in the drawings, for example. It will be noted that in FIG. 1 arrows Z, A, and D indicate a circumferential direction, an axial direction, and a radial direction, respectively, of the stator core 12. Hereinafter, the circumferential direction of the stator core 12 may be simply called "the circumferential direction," the axial direction of the stator core 12 may be simply called "the axial direction," and the radial direction of the stator core 12 may be simply called "the radial direction."

The stator core 12 is formed in the shape of an open cylinder as a result of numerous electromagnetic steel sheets being stacked. The stator core 12 has a yoke 14, numerous teeth 16, and a plurality of slots 18. The numerous teeth 16 and the plural slots 18 are alternately formed in the circumferential direction on the inner peripheral side of the stator core 12. The plural slots 18 open to both sides in the axial direction and inward in the radial direction.

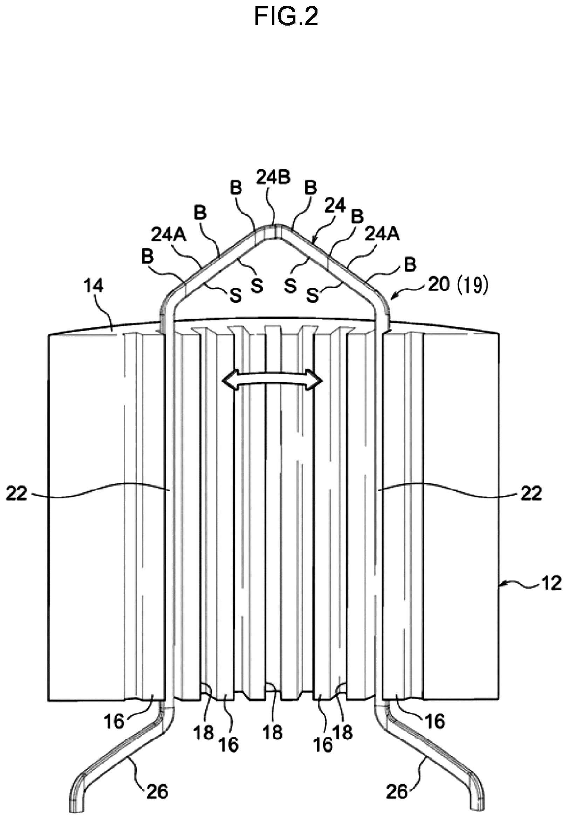

As shown in FIG. 2, the stator coil 19 is configured to include a plurality of segment coils 20. The segment coils 20 are each configured by a flat wire with a rectangular cross section comprising copper, for example, and formed substantially in a U-shape. The segment coils 20 each have a pair of slot insertion portions 22 that extend parallel to each other, a coil end portion 24 that interconnects one end portions of the pair of slot insertion portions 22, and a pair of lead portions 26 that extend from other end portions of the pair of slot insertion portions 22. The segment coils 20 are covered with an insulating film except for the leading end portions of the pair of lead portions 26. The pair of lead portions 26 are an example of "joint end portions" pertaining to the technology of this disclosure.

The pair of slot insertion portions 22 are inserted from one side in the axial direction side into different slots 18 spaced apart from each other in the circumferential direction of the stator core 12. The coil end portion 24 is disposed outside the slots 18 on the one side in the axial direction of the stator core 12 and interconnects the one end portions of the pair of slot insertion portions 22 in the circumferential direction. As shown in FIG. 1, the numerous segment coils 20 are stacked in multiple layers in the radial direction of the stator core 12 and aligned in an annular shape. The pair of lead portions 26 of each of the segment coils 20 project from the end face of the stator core 12 on the other side in the axial direction. These lead portions 26 are twisted and joined to the lead portions 26 of other segment coils 20.

In the following description, the side of the stator core 12 on which the coil end portions 24 of the segment coils 20 are positioned will be called a turn side, and the side of the stator core 12 on which the lead portions 26 of the segment coils 20 are positioned will be called a welding side. It will be noted that the method of joining the lead portions 26 together is not limited to welding, and other joining means (e.g., ultrasonic welding, friction welding, mechanical fastening) may of course be used.

The segment coils 20 have what is called a wave winding in which they are wound continuously all the way around the stator core 12. In other words, the segment coils 20 are routed by wave winding along the circumferential direction of the stator core 12, and the segment coils 20 are electrically connected to each other to form the stator coil 19.

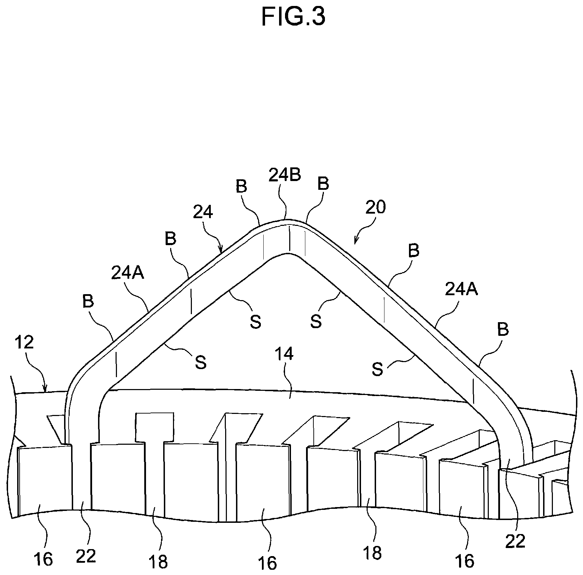

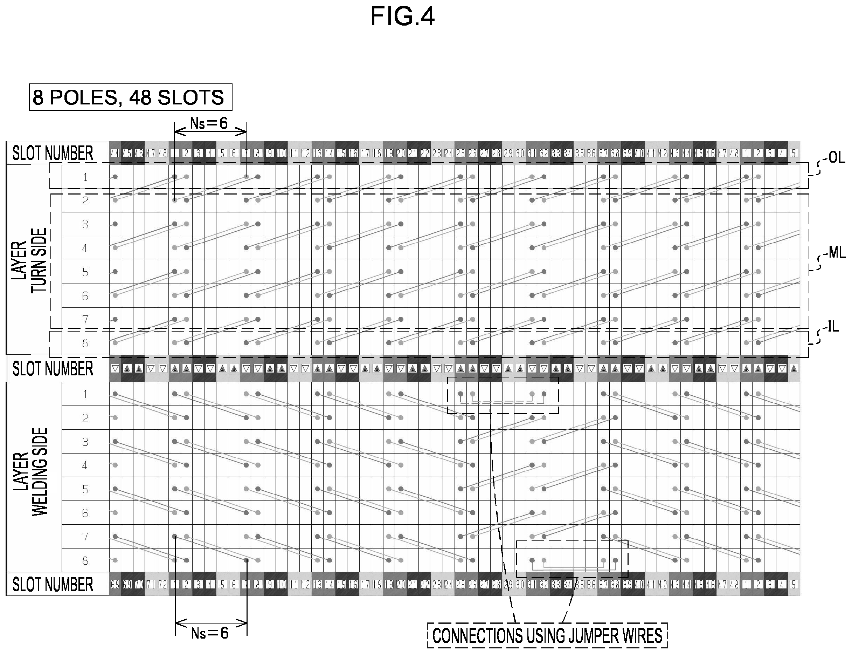

As shown in FIG. 3, the coil end portion 24 of each of the segment coils 20 is formed substantially in a V-shape or substantially in a U-shape when viewed in the radial direction. When viewed in the axial direction as shown in FIG. 4, the coil end portion 24 is curved like a bow along the circumferential direction. The coil end portion 24 has two curved portions 24A that extend along the circumferential direction when viewed in the axial direction and a crank portion 24B that is provided between and interconnects the two curved portions 24A. The crank portion 24B is bent in a crank shape so as to stagger the two curved portions 24A in the radial direction. The two curved portions 24A are disposed staggered from each other in the radial direction by about the thickness of the flat wire.

As shown in FIG. 1, the numerous segment coils 20 form a single layer as a result of the slot insertion portions 22 being sequentially inserted into each of the slots 18 of the stator core 12 while moving one slot 18 at a time in the circumferential direction to complete one revolution. In this embodiment, three layers of the segment coils 20 are formed. Additionally, the circumferential direction length of the segment coils 20 in each layer differs slightly depending on the position of each layer in the radial direction.

In this connection, as shown in FIG. 4, the segment coils 20 in a stator coil 19 pertaining to a comparative example are interconnected in a wave winding. In FIG. 4, only the wiring of the segment coils 20 corresponding to one phase (e.g., the U-phase) of the three-phase alternating current flowing through the stator coil 19 is shown.

Furthermore, in the stator core 12, the number of slots per pole per phase, which is a value obtained by dividing the number of the slots by the number of magnetic poles of the rotor and the number of phases of the alternating current generated in the stator coil 19, is set to 2. In the example shown in FIG. 4, the total number of slots is 48 and the number of magnetic poles is 8 in the three-phase alternating current, so the number of slots per pole per phase is 2 (= 48 / (3 × 8)).

When the number of slots per pole per phase is 2, a slot pitch Ns in the stator coil 19 pertaining to the comparative example is set to the same value as a magnetic pole pitch P. Here, the slot pitch Ns is the spacing between the slots 18 into which each segment coil 20 is inserted. Specifically, the slot pitch Ns is the number of the slots 18 that the segment coil 20 straddles. That is, it is the number of the slots 18 from the slot 18 next to the slot 18 into which one of the pair of slot insertion portions 22 of the segment coil 20 is inserted to the slot 18 into which the other is inserted. Furthermore, the magnetic pole pitch P is a value obtained by dividing the total number of slots by the number of magnetic poles of the rotor. In other words, the magnetic pole pitch P is the number of slots corresponding to one magnetic pole.

Additionally, in the example shown in FIG. 4, the total number of slots is 48 and the number of magnetic poles is 8 (i.e., 8 poles and 48 slots), so the magnetic pole pitch P = 6. That is, here, the slot pitch Ns is set equal to 6 (= magnetic pole pitch P). As an example, the same segment coil 20 is inserted into the slot of slot number 1 of layer no. 2 on the turn side and into the slot of slot number 7 of layer no. 1 on the turn side. That is, there are six of the slots 18 from slot number 2, which comes after slot number 1 into which the segment coil 20 is inserted, to slot number 7 into which the same segment coil 20 is inserted. In this way, the slot pitch Ns = 6.

In the stator coil 19 pertaining to the comparative example, the slot pitches Ns are all the same value as the magnetic pole pitch P in an outermost layer OL on the turn side, an innermost layer IL on the turn side, and a middle layer between the outermost layer OL and the innermost layer IL on the turn side.

Here, the outermost layer OL is a group of the segment coils 20 (i.e., a segment coil group) disposed on the outermost side in the radial direction in the plural slots 18 that the stator core 12 has. Furthermore, the innermost layer IL is a group of the segment coils 20 disposed on the innermost side in the radial direction in the plural slots 18 that the stator core 12 has. Moreover, the middle layer ML is a group of the segment coils 20 disposed between the outermost layer OL and the innermost layer IL.

In the example shown in FIG. 4, the slot pitch Ns = 6 in all of the outermost layer OL on the turn side, the innermost layer IL on the turn side, and the middle layer between the outermost layer OL and the innermost layer IL on the turn side.

Furthermore, on the welding side also, the slot pitch Ns is the same value as the magnetic pole pitch P. In the example shown in FIG. 4, on the welding side, the slot pitch Ns = 6.

In the stator coil 19 pertaining to this comparative example, the segment coils 20 are inserted at the slot pitch Ns described above, and the lead portions 26 of adjacent segment coils 20 are twisted and joined together. However, in this case, in the outermost layer and/or the innermost layer on the welding side, places arise where the spacing between the segment coils 20 is wider (i.e., the slot pitch is partially larger) than it is in other places. For this reason, the lead portions 26 are unable to be joined together, and jumper wires between adjacent segment coils 20 become necessary in the outermost layer and/or the innermost layer.

In the example shown in FIG. 4, slot nos. 25 and 32 of the outermost layer on the welding side are interconnected with a jumper wire. Similarly, slot nos. 26 and 31 of the outermost layer on the welding side are interconnected with a jumper wire. Alternatively, slot nos. 31 and 38 of the innermost layer on the welding side are interconnected with a jumper wire. Similarly, slot nos. 32 and 37 of the innermost layer on the welding side are interconnected with a jumper wire.

When the stator coil 19 is formed using jumper wires in this way, the number of parts increases, which may lead to a reduction in assemblability and an increase in cost.

Thus, after diligent consideration the present inventors had the idea that, when the number of slots per pole per phase is 2, by setting the relationship between the slot pitches Ns of the outermost layer OL, the innermost layer IL, and the middle layer ML on the turn side and the slot pitch Ns on the welding side to a predetermined condition, the wiring of a wave-wound stator coil 19 can be realized without using jumper wires.

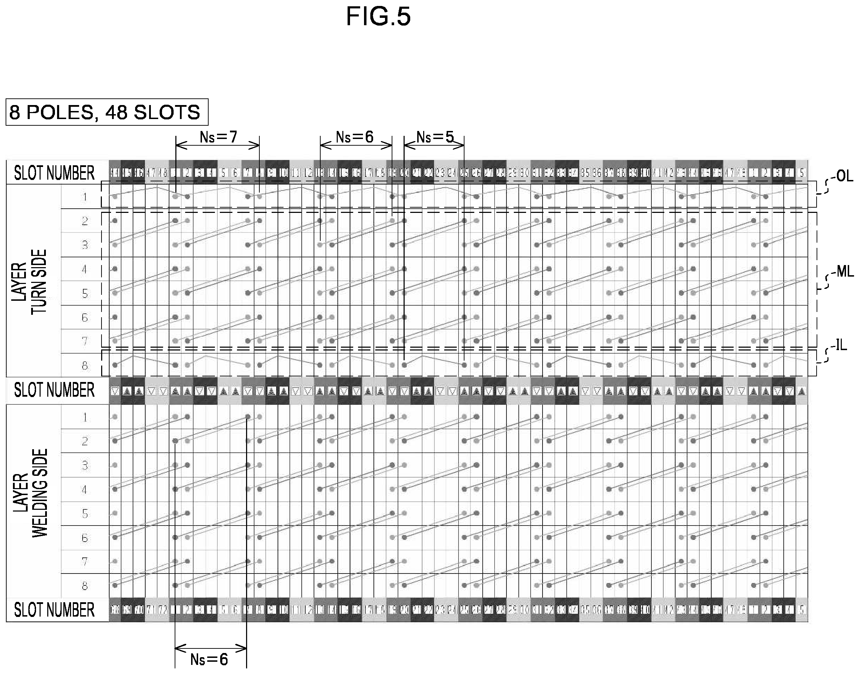

As shown in FIG. 5, in the stator coil 19 pertaining to this embodiment, on the turn side, the slot pitches Ns and the magnetic pole pitch P have the following relationship. That is, one of the slot pitch Ns of the outermost layer OL or the slot pitch Ns of the innermost layer IL is set to Ns = P + 1 and the other is set to Ns = P - 1. In other words, the slot pitch Ns of the outermost layer OL is set equal to P + 1 and the slot pitch Ns of the innermost layer IL is set equal to P - 1, or, the slot pitch Ns of the outermost layer OL is set equal to P - 1 and the slot pitch Ns of the innermost layer IL is set equal to P + 1.

In the example shown in FIG. 5, there are 8 poles and 48 slots, so the magnetic pole pitch P = 6. Additionally, the slot pitch Ns of the outermost layer OL is set equal to 7. As an example, the same segment coil 20 is inserted into the slot of slot number 1 and the slot of slot number 8 of the outermost layer (i.e., layer no. 1) on the turn side.

Furthermore, the slot pitch Ns of the innermost layer IL is set equal to 5. As an example, the same segment coil 20 is inserted into the slot of slot number 20 and the slot of slot number 25 of the innermost layer (i.e., layer no. 8) on the turn side.

Furthermore, in the stator coil 19 pertaining to this embodiment, the slot pitches Ns on the turn side and the slot pitch Ns on the welding side have the following relationship. That is, one of the slot pitch Ns of the middle layer ML on the turn side or the slot pitch Ns on the welding side is set to Ns = P + k and the other is set to Ns = P - k. Here, k is the difference between the magnetic pole pitch P and the slot pitch Ns. When the wave winding is a full-pitch winding, the magnetic pole pitch P and the slot pitch Ns are the same, so k = 0. In the example shown in FIG. 5, the slot pitch Ns of the middle layer ML is set equal to P + k. Additionally, since the wave winding is a full-pitch winding (k = 0), the slot pitch Ns of the middle layer ML is set equal to 6 (= P). Furthermore, on the welding side also, the slot pitch Ns = 6 (=P).

In this way, when the number of slots per pole per phase in the stator coil 19 is 2, the relationship between the slot pitches Ns of the outermost layer OL, the innermost layer IL, and the middle layer ML on the turn side and the slot pitch Ns on the welding side is set to a predetermined condition. Because of this, by adjusting the slot pitches Ns in the outermost layer OL, the middle layer ML, and the innermost layer IL in relation to the magnetic pole pitch P, the positions of the starting points and the ending points of the wave winding in the stator coil 19 can be aligned, and there is no longer the need to use jumper wires. That is, when the segment coils 20 are joined together by wave winding in the stator core 12, they can be electrically interconnected without using jumper wires. FIG. 5 shows an example in which the segment coils 20 are routed by wave winding without interconnecting them with jumper wires such as shown in FIG. 4.

### (Action and Effects)

As described above, in the stator core 12 pertaining to this embodiment, when the number of slots per pole per phase is 2, and when P denotes the magnetic pole pitch and k denotes the difference between the slot pitch Ns, which is the pitch of the slots on the side where the segment coils 20 are inserted, and the magnetic pole pitch P, one of the slot pitches Ns in the outermost layer OL or the innermost layer IL is set to P + 1 and the other is set to P - 1. Furthermore, one of the slot pitch Ns of the middle layer ML or the slot pitch Ns on the welding side is set to P + k and the other is set to P - k. In this way, by setting the relationship between the slot pitches Ns of the outermost layer OL, the innermost layer IL, and the middle layer ML on the turn side and the slot pitch Ns on the welding side to a predetermined condition, the wiring of the wave-wound stator coil 19 can be realized without using jumper wires.

For example, in the wave winding pertaining to the comparative example shown in FIG. 4, it is necessary to interconnect the segment coils 20 using jumper wires. Particularly when the stator coil 19 is configured using jumper wires, generally jumper wires have sometimes become necessary in the outermost layer OL or the innermost layer IL. For that reason, this has led to problems such as an increase in the number of parts associated with using jumper wires. In the present configuration, as described above, by adjusting the slot pitches Ns in the outermost layer OL, the middle layer ML, and the innermost layer IL in relation to the magnetic pole pitch P, the positions of the starting points and the ending points of the wave winding in the stator coil 19 can be aligned, and there is no longer the need to use jumper wires. That is, it becomes possible to improve the productivity of the wave-wound stator coil 19 even when segment coils 20 are used.

Furthermore, in the stator core 12 pertaining to this embodiment, even when the wave winding is a full-pitch winding, by setting the relationship between the slot pitches Ns of the outermost layer OL, the innermost layer IL, and the middle layer ML on the turn side and the slot pitch Ns on the welding side to a predetermined condition in this way, the positions of the starting points and the ending points of the wave winding in the stator coil can be aligned, and there is no longer the need to use jumper wires.

### <Second Embodiment>

Although in the above first embodiment an example was described in which the wave winding in the stator coil 19 is a full-pitch winding, the technology of this disclosure is not limited thereto. In this second embodiment, the segment coils 20 with the same phase that are adjacent to each other in the radial direction of the stator core 12 in the wave winding are disposed in positions in which the slot pitches Ns are staggered by k from each other. As a result, here, the wave winding is a short-pitch winding.

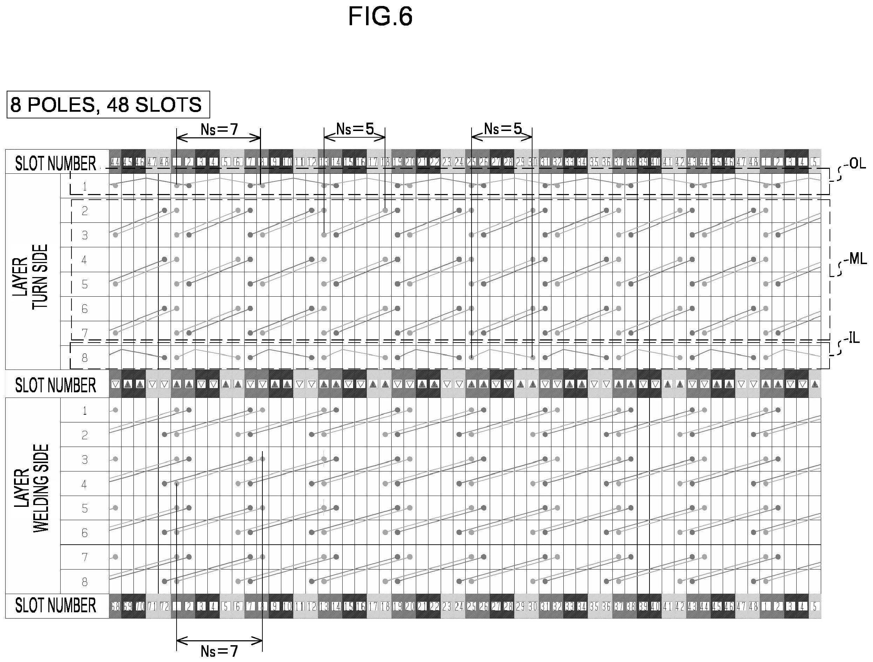

In the stator coil 19 pertaining to this embodiment, as in the first embodiment, when the number of slots per pole per phase is 2, one of the slot pitch Ns of the outermost layer OL or the slot pitch Ns of the innermost layer IL is set to Ns = P + 1 and the other is set to Ns = P - 1. In the example shown in FIG. 6, there are 8 poles and 48 slots, so the magnetic pole pitch P = 6. Additionally, the slot pitch Ns of the outermost layer OL is set equal to 7. Furthermore, the slot pitch Ns of the innermost layer IL is set equal to 5.

Furthermore, in the stator coil 19 pertaining to this embodiment, one of the slot pitch Ns of the middle layer ML on the turn side or the slot pitch Ns on the welding side is set to Ns = P + k and the other is set to Ns = P - k (k: the difference between the magnetic pole pitch P and the slot pitch Ns). Here, k < P (k is a positive integer).

In this embodiment, the segment coils 20 with the same phase that are adjacent to each other in the radial direction of the stator core 12 in the wave winding are disposed in positions in which the slot pitches Ns are staggered by k from each other. Moreover, the difference k between the magnetic pole pitch P and the slot pitch Ns is equal to 1. In the example shown in FIG. 6, the slot pitch Ns of the middle layer ML is set equal to P - k. Additionally, since k = 1, the slot pitch Ns of the middle layer ML is set equal to 5 (= P - k). As an example, the same segment coil 20 is inserted into the slot of slot number 13 of layer no. 3 and the slot of slot number 18 of layer no. 2 of the middle layer ML on the turn side.

Furthermore, on the welding side, the slot pitch Ns is set equal to P + k. Additionally, since k = 1, the slot pitch Ns of the middle layer ML is set equal to 7 (= P + k). As an example, the same segment coil 20 is inserted into the slot of slot number 1 of layer no. 4 and the slot of slot number 8 of layer no. 3 on the welding side.

As described above, in the second embodiment, when the number of slots per pole per phase in the stator coil 19 is 2, the relationship between the slot pitches Ns of the outermost layer OL, the innermost layer IL, and the middle layer ML on the turn side and the slot pitch Ns on the welding side is set to a predetermined condition. Because of this, by adjusting the slot pitches Ns in the outermost layer OL, the middle layer ML, and the innermost layer IL in relation to the magnetic pole pitch P, the positions of the starting points and the ending points of the wave winding in the stator coil 19 can be aligned, and there is no longer the need to use jumper wires. That is, when the segment coils 20 are interconnected with a short-pitch winding in the stator core 12, they can be electrically interconnected without using jumper wires.

Furthermore, in this second embodiment, the difference k between the magnetic pole pitch P and the slot pitch Ns is set equal to 1, the magnetic pole pitch P = 6, and k < P. Consequently, even with a short-pitch winding in which k < P, the positions of the starting points and the ending points of the wave winding in the stator coil 19 can be aligned, and there is no longer the need to use jumper wires.

### (First Example Modification)

It will be noted that although in the above second embodiment an example was described in which the slot pitch Ns of the middle layer ML on the turn side is equal to P - k and the slot pitch Ns on the welding side is equal to P + k, the technology of this disclosure is not limited thereto. In this first example modification, the slot pitch Ns of the middle layer ML on the turn side is equal to P + k, and the slot pitch Ns on the welding side is equal to P - k (k: the difference between the magnetic pole pitch P and the slot pitch Ns).

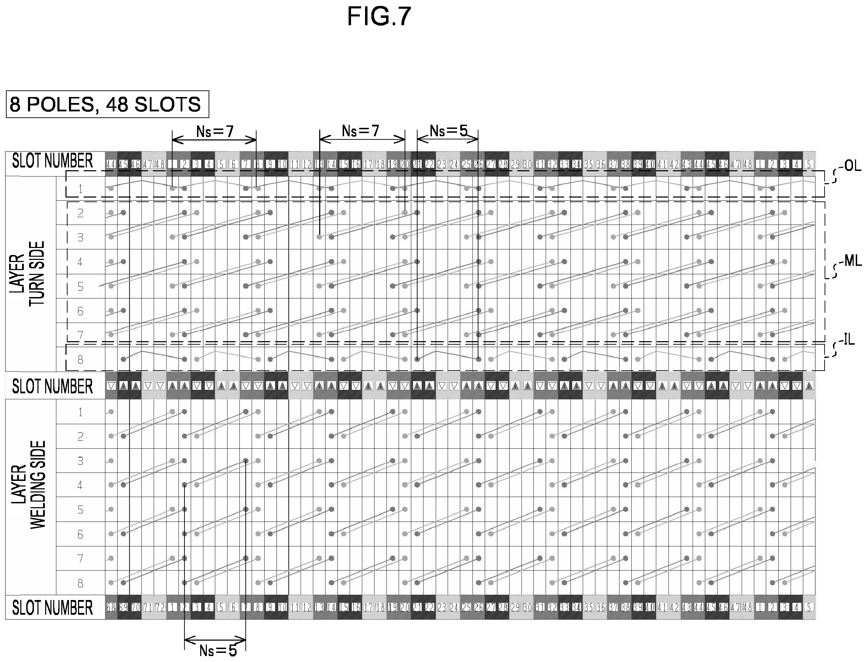

As shown in FIG. 7, in this example modification, there are 8 poles and 48 slots, so the magnetic pole pitch P = 6. Furthermore, the wave winding is a short-pitch winding, and the difference k between the magnetic pole pitch P and the slot pitch Ns is equal to 1. In the example shown in FIG. 7, the slot pitch Ns of the middle layer ML is set equal to P + k. Additionally, since k = 1, the slot pitch Ns of the middle layer ML is set equal to 7 (= P + k). As an example, the same segment coil 20 is inserted into the slot of slot number 13 of layer no. 3 and into the slot of slot number 20 of layer no. 2 of the middle layer ML on the turn side.

Furthermore, on the welding side, the slot pitch Ns is set equal to P - k. Additionally, since k = 1, the slot pitch Ns of the middle layer ML is set equal to 5 (= P - k). As an example, the same segment coil 20 is inserted into the slot of slot number 2 of layer no. 4 and into the slot of slot number 7 of layer no. 3 on the welding side.

As described above, in this first example modification, when the number of slots per pole per phase in the stator coil 19 is 2, the relationship between the slot pitches Ns of the outermost layer OL, the innermost layer IL, and the middle layer ML on the turn side and the slot pitch Ns on the welding side is set to a predetermined condition. Because of this, by adjusting the slot pitches Ns in the outermost layer OL, the middle layer ML, and the innermost layer IL in relation to the magnetic pole pitch P, the positions of the starting points and the ending points of the wave winding in the stator coil 19 can be aligned, and there is no longer the need to use jumper wires. That is, when the segment coils 20 are joined together by wave winding in the stator core 12, they can be electrically interconnected without using jumper wires.

### (Second Example Modification)

Although in the above second embodiment an example was described in which the difference k between the magnetic pole pitch P and the slot pitch Ns is equal to 1, the technology of this disclosure is not limited thereto. In this second example modification, k is set equal to 2.

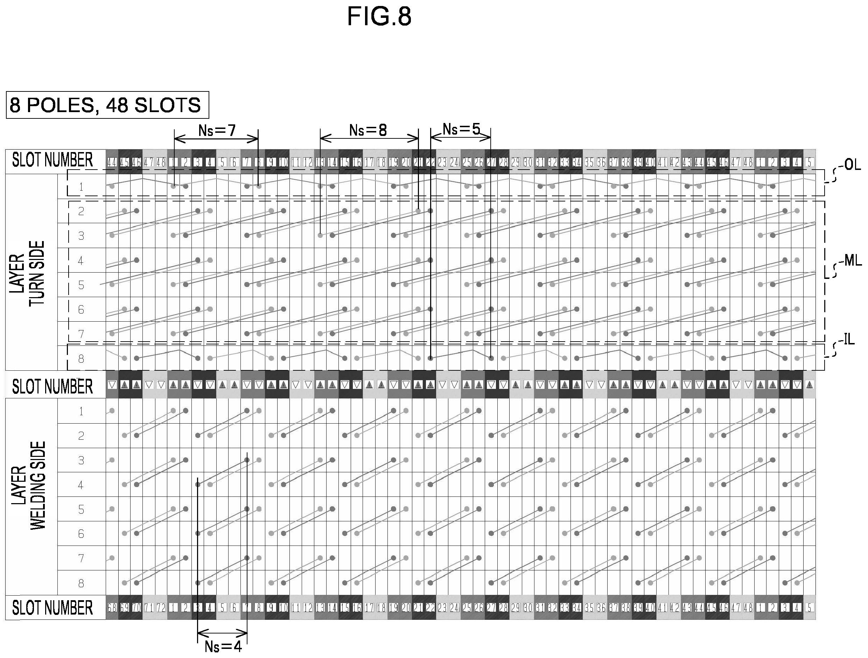

As shown in FIG. 8, in this example modification, there are 8 poles and 48 slots, so the magnetic pole pitch P = 6. Furthermore, the wave winding is a short-pitch winding, and the difference k between the magnetic pole pitch P and the slot pitch Ns is equal to 2. In the example shown in FIG. 8, the slot pitch Ns of the middle layer ML is set equal to P + k. Additionally, since k = 2, the slot pitch Ns of the middle layer ML is set equal to 8 (= P + k). As an example, the same segment coil 20 is inserted into the slot of slot number 13 of layer no. 3 and into the slot of slot number 21 of layer no. 2 of the middle layer ML on the turn side.

Furthermore, on the welding side, the slot pitch Ns is set equal to P - k. Additionally, since k = 2, the slot pitch Ns of the middle layer ML is set equal to 4 (= P - k). As an example, the same segment coil 20 is inserted into the slot of slot number 3 of layer no. 4 and the slot of slot number 7 of layer no. 3 on the welding side.

As described above, in this second example modification, when the number of slots per pole per phase in the stator coil 19 is 2, the relationship between the slot pitches Ns of the outermost layer OL, the innermost layer IL, and the middle layer ML on the turn side and the slot pitch Ns on the welding side is set to a predetermined condition. Because of this, by adjusting the slot pitches Ns in the outermost layer OL, the middle layer ML, and the innermost layer IL in relation to the magnetic pole pitch P, the positions of the starting points and the ending points of the wave winding in the stator coil 19 can be aligned, and there is no longer the need to use jumper wires. That is, when the segment coils 20 are joined together by wave winding in the stator core 12, they can be electrically interconnected without using jumper wires.

It will be noted that although in these embodiments the segment coils 20 are configured by flat wires comprising metal wires with rectangular cross sections, they are not limited thereto, and the stator coil 19 may be configured by flat wires with rectangular cross sections comprising multiple strands. Furthermore, although in these embodiments the stator core 12 is configured by stacked steel sheets, it is not limited thereto, and at least part of the stator core 12 may be configured by a powder magnetic core.

Furthermore, although in the above embodiments an example was described in which the segment coils 20 are each substantially U-shaped, the technology of this disclosure is not limited thereto. The segment coils 20 may include an I-shaped segment coil. The I-shaped segment coil 20 is a flat wire comprising a metal wire with a rectangular cross section and is inserted into one slot 18. Additionally, both ends of the I-shaped segment coil 20 that project from the stator core 12 are joined to another member.

The content of the above description and the content shown in the drawings are a detailed description of parts pertaining to the technology of this disclosure and are merely one example of the technology of this disclosure. For example, descriptions above relating to configurations, functions, actions, and effects are descriptions relating to one example of configurations, functions, actions, and effects of parts pertaining to the technology of this disclosure. Thus, it goes without saying that unnecessary parts may be deleted from, new elements may be added to, and substitutions may be made to the content of the above description and the content shown in the drawings without departing from the spirit of the technology of this disclosure. Furthermore, in order to avoid complexity and facilitate understanding of parts pertaining to the technology of this disclosure, in the content of the above description and the content shown in the drawings, description relating to common technical knowledge that does not particularly require description to enable implementation of the technology of this disclosure is omitted.

All documents, patent applications, and technical standards mentioned in this specification are incorporated herein by reference to the same extent as if each individual document, patent application, or technical standard were specifically and individually indicated to be incorporated by reference.

Furthermore, the disclosure of Japanese Patent Application No. 2023-124988, filed on July 31, 2023, is incorporated in its entirety by reference herein.

## Claims

1. A stator for a rotating electrical machine, the stator comprising:
a stator core having a plurality of slots; and
a stator coil formed by segment coils, which are respectively configured using a flat wire with a rectangular cross section and inserted into different slots spaced apart from each other in a circumferential direction of the stator core, and each of which has a joint end portion that projects from the slot at an opposite side from the insertion side and is joined in a wave winding to the joint end portion of another segment coil along the circumferential direction to thereby electrically connect the segment coils, wherein:
when a number of slots per pole per phase, which is a value obtained by dividing a number of the slots by a number of magnetic poles of a rotor that rotates relative to the stator core and a number of phases of alternating current generated in the stator coil, is 2, and
when P denotes a magnetic pole pitch, which is a value obtained by dividing the number of the slots by the number of the magnetic poles of the rotor, and k denotes a difference between a slot pitch, which is a pitch of the slots at a side at which the segment coils are inserted, and the magnetic pole pitch,
one of the slot pitches in an outermost layer or an innermost layer of the stator core on the insertion side is set to P + 1 and another is set to P - 1, and
one of the slot pitches in a middle layer between the outermost layer and the innermost layer of the stator core on the insertion side or the pitch of the slots at a side to which the joint end portions that are joined to each other project is set to P + k and another is set to P - k.

2. The stator for a rotating electrical machine of claim 1, wherein the segment coils with the same phase that are adjacent to each other in a radial direction in the wave winding in the stator coil are disposed at positions at which the slot pitches are staggered by k from each other.

3. The stator for a rotating electrical machine of claim 2, wherein the wave winding is set to k < P.

4. The stator for a rotating electrical machine of claim 1, wherein the wave winding in the stator coil is a full-pitch winding, and k = 0.
